# EUROPÄISCHE PATENTANMELDUNG

(11) **EP 3 034 840 A1**
(43) Veröffentlichungstag der Anmeldung: **22.06.2016**
(21) Anmeldenummer: 15197330.2
(22) Anmeldetag: 01.12.2015
(51) Int. Cl.: F02C 7/236, B64D 37/00, F02C 9/46

(54) **VERFAHREN ZUR ERMITTLUNG EINES TREIBSTOFFLECKS EINES TREIBSTOFFSYSTEMS EINES WENIGSTENS ZWEI TRIEBWERKE AUFWEISENDEN FLUGZEUGS**

(30) Priorität: 19.12.2014 DE 102014119210
(71) Anmelder: Rolls-Royce Deutschland Ltd & Co KG, 15827 Blankenfelde-Mahlow (DE)
(72) Erfinder: Blumrich, Markus, 10247 Berlin (DE)
(74) Vertreter: Schmidt, Martin Michael

(57) **Zusammenfassung**

Es wird ein Verfahren zur Ermittlung eines Treibstofflecks eines Treibstoffsystems eines wenigstens zwei Triebwerke (3, 71) aufweisenden Flugzeugs (5) beschrieben, wobei sowohl einem ersten Triebwerk (3) als auch einem zweiten Triebwerk (71) jeweils eine Tankeinrichtung und jeweils wenigstens eine mit einer Steuer- und Auswerteeinrichtung (73) verbundene Sensoreinrichtung (36, 63) zugeordnet ist. Mittels der wenigstens einen Sensoreinrichtung (36, 63) werden Werte aus einer Gruppe definierter Parameter für das zugeordnete Triebwerk (3, 71) ermittelt. Die Steuer- und Auswerteeinrichtung (73) vergleicht von den miteinander korrespondierenden Sensoreinrichtungen (36, 63) ermittelte Werte und erkennt bei Vorliegen einer Abweichung der Werte eines Parameters größer als ein vorbestimmter Schwellwert ein Treibstoffleck des Treibstoffsystems (1).

## Beschreibung

Die Erfindung betrifft ein Verfahren zur Ermittlung eines Treibstofflecks eines Treibstoffsystems eines wenigstens zwei Triebwerke aufweisenden Flugzeugs gemäß der im Oberbegriff des Patentanspruches 1 näher definierten Art.

Aus der Praxis sind Verfahren bekannt, mit denen Treibstofflecks eines mit zwei Triebwerken ausgeführten Flugzeugs aufgrund von voneinander abweichenden Füllständen der Tankeinrichtungen der Triebwerke ermittelt werden. Eine Leckage kann mit einem derartigen Verfahren nachteilhafterweise allerdings erst ungewünscht spät ermittelt werden. Wenn zwischen den Tankeinrichtungen durch ein sogenanntes "Cross Feed" Treibstoff ausgetauscht wird, sind Treibstofflecks mit einem derartigen Verfahren nicht ermittelbar.

Aus der Praxis sind weiterhin Verfahren bekannt, bei denen zur Erkennung eines Treibstofflecks eine dem Brenner des jeweiligen Triebwerks zugeführte Treibstoffmenge gemessen und die Werte des linken Triebwerks mit den Werten des rechten Triebwerks verglichen werden. Ein Treibstoffleck wird dabei ermittelt, wenn eine Abweichung der Werte des einen Triebwerks von den entsprechenden Werten des anderen Triebwerks größer als ein vorbestimmter Grenzwert ist.

Derartige bekannte Verfahren haben den Nachteil, dass nur Treibstofflecks mit einer relativ großen Leckagerate ermittelbar sind und Treibstofflecks gegebenenfalls nicht oder sehr spät ermittelt werden.

Der vorliegenden Erfindung liegt die Aufgabe zugrunde, ein Verfahren zur Ermittlung eines Treibstofflecks eines Treibstoffsystems eines wenigstens zwei Triebwerke aufweisenden Flugzeugs zur Verfügung zu stellen, mittels welche Treibstofflecks zuverlässig ermittelbar sind.

Erfindungsgemäß wird diese Aufgabe mit einem Verfahren mit den Merkmalen des Patentanspruches 1 gelöst.

Das erfindungsgemäße Verfahren ist zur Ermittlung eines Treibstofflecks eines Treibstoffsystems eines wenigstens zwei Triebwerke aufweisenden Flugzeugs vorgesehen, wobei sowohl einem ersten Triebwerk als auch einem zweiten Triebwerk jeweils eine Tankeinrichtung und jeweils wenigstens eine mit einer Steuer-und Auswerteeinrichtung verbundene Sensoreinrichtung zugeordnet ist.

Erfindungsgemäß ist vorgesehen, dass mittels der wenigstens einen Sensoreinrichtung Werte für das zugeordnete Triebwerk aus der Gruppe der Parameter
- Temperatur des Treibstoffs und/oder
- Druckdifferenz zwischen vordefinierten Stellen in dem Treibstoffsystem und/oder
- Temperatur des Öls eines dem Triebwerk zugeordneten Ölkreislaufs, zu dessen Kühlung der Treibstoff als Kühlmittel vorgesehen ist, und/oder
- Druckdifferenz zwischen vordefinierten Stellen in dem dem Triebwerk zugeordneten Ölkreislauf und/oder
- Leistung einer Pumpeneinrichtung zur Förderung von Treibstoff des Treibstoffsystems zu einem Brenner des Triebwerks
ermittelt werden, wobei die Steuer- und Auswerteeinrichtung von den miteinander korrespondierenden Sensoreinrichtungen ermittelte Werte vergleicht und bei Vorliegen einer Abweichung der Werte eines Parameters größer als ein vorbestimmter Schwellwert ein Treibstoffleck des Treibstoffsystems erkennt.

Umfangreiche Versuche haben ergeben, dass mit dem erfindungsgemäßen Verfahren Treibstofflecks zuverlässiger als mit bekannten Verfahren erkannt werden, wobei insbesondere bereits kleinere Treibstofflecks mit Leckageraten von bis zu 350 pounds per hour (pph) in einem Leerlaufbetrieb, mit Austrittsraten von bis zu 600 pph in einem Flugbetrieb und mit Austrittsraten von bis zu 1200 pph in einem Steigflugbetrieb der jeweiligen Triebwerke des Flugzeugs erkannt werden. Das erfindungsgemäße Verfahren ist vorteilhafterweise einfach in bestehende Systeme integrierbar, insbesondere wenn entsprechende Sensoreinrichtungen zur Ermittlung eines Parameters bereits vorhanden sind. In diesem Fall ist lediglich eine neue, das erfindungsgemäße Verfahren umsetzende Software zu implementieren. Mit dem erfindungsgemäßen Verfahren ist eine Erkennung von Treibstofflecks vorteilhafterweise in Echtzeit möglich.

Dem erfindungsgemäßen Verfahren liegt die Erkenntnis zugrunde, dass bei einem Treibstoffleck des Treibstoffsystems eine im Treibstoffsystem in Richtung des Brenners des Triebwerks geförderte Treibstoffmenge ansteigt und sich die Temperatur des Treibstoffs hierdurch verändert und insbesondere sinkt. Durch einen Vergleich der Temperaturwerte des Treibstoffs der beiden Triebwerke miteinander ist hierdurch eine derartige erhöhte Treibstoffzufuhr ermittelbar.

In hierzu analoger Weise ist durch die Ermittlung einer Druckdifferenz zwischen vordefinierten Stellen in dem Treibstoffsystem ein Treibstoffleck ermittelbar, da durch eine leckagebedingte vergrößerte Treibstofffördermenge in verschiedenen Bereichen des Treibstoffsystems eine Druckänderung auftritt.

Auch über die Temperatur des Öls eines dem Triebwerk zugeordneten Ölkreislaufs ist durch das Zusammenwirken des Öls mit dem Treibstoffsystem im Bereich einer Kühleinrichtung ein erhöhter Treibstofffluss im Treibstoffsystem ermittelbar, da sich im Bereich der Kühleinrichtung hieraus veränderte Kühleigenschaften mit einer sich verändernden Temperatur des Öls ergeben.

Da sich bei einer Temperaturänderung des Öls des Ölkreislaufs auch die Viskosität des Öls ändert, ist ein Treibstoffleck auch über Drucksensoren, die eine Druckänderung zwischen vordefinierten Stellen des Ölkreislaufs messen, erkennbar.

Bei einer veränderten Fördermenge von Treibstoff in dem Treibstoffsystem aufgrund eines Lecks ändern sich auch die Leistungseigenschaften der Pumpeneinrichtung zur Förderung von Treibstoff des Treibstoffsystems zu dem Brenner des Triebwerks. Somit kann auch durch einen Vergleich korrelierender Leistungseigenschaften der Pumpeinrichtung der beiden Triebwerke ein Treibstoffleck auf einfache Weise erkannt werden.

Um das Auftreten einer fehlerhaften Treibstoffleckerkennung zu reduzieren, ist bei einer vorteilhaften Ausführung des erfindungsgemäßen Verfahrens vorgesehen, dass die Steuer- und Auswerteeinrichtung zur Ermittlung eines Treibstofflecks die Werte der Triebwerke von wenigstens zwei der Parameter vergleicht und ein Treibstoffleck erkennt, wenn eine Abweichung der jeweiligen Werte der beiden Triebwerke jeweils größer als ein jeweils vorbestimmter Schwellwert ist. Je mehr Parameter der beiden Triebwerke verglichen werden, umso sicherer können fehlerhafte Leckageerkennungen vermieden werden.

Die Steuer- und Auswerteeinrichtung erkennt bei einer Weiterbildung des erfindungsgemäßen Verfahrens ein Treibstoffleck nur, wenn die Abweichung der Werte wenigstens eines Parameters größer als der vorbestimmte, insbesondere in der Steuer- und Auswerteeinrichtung hinterlegte Schwellwert vorzugsweise durchgängig über einen vordefinierten Zeitraum vorliegt. Auch durch das Vorsehen eines derartigen Zeitraums, der beispielsweise etwa 30 Sekunden betragen kann, kann eine unerwünschte fehlerhafte Leckageerkennung auf einfache Weise vermieden werden.

Bei einer vorteilhaften Ausführung des erfindungsgemäßen Verfahrens kann bei einem Vergleich der Temperaturwerte des Treibstoffs der beiden Triebwerke der vorzugsweise in der Steuer- und Auswerteeinrichtung hinterlegte Schwellwert einer Temperaturdifferenz größer 10 °C, insbesondere zwischen 15 °C und 30 °C entsprechen. In Versuchen hat sich dabei ein Schwellwert als besonders vorteilhaft erwiesen, der einer Temperaturdifferenz von etwa 17 °C entspricht.

Bei einem Vergleich der Temperaturwerte des Öls der beiden Triebwerke kann der in der Steuer- und Auswerteeinrichtung hinterlegte Schwellwert einer Temperaturdifferenz größer 10 °C, insbesondere zwischen 15 °C und 30 °C, entsprechen. In Versuchen wurde eine Korrelation der Öltemperatur des Ölkreislaufs mit der Temperatur des Treibstoffs in dem Treibstoffsystem derart ermittelt, dass ein Treibstoffleck besonders fehlerresistent erkannt wird, wenn der Schwellwert einer Temperaturdifferenz von etwa 15 °C entspricht.

Des Weiteren kann bei einer vorteilhaften Weiterbildung des erfindungsgemäßen Verfahrens vorgesehen sein, dass die Steuer- und Auswerteeinrichtung ein Treibstoffleck nur erkennt, wenn ein konstanter Betriebszustand der beiden Triebwerke detektiert wird. Insbesondere wenn eine Hochdruckwellendrehzahl beider Triebwerke für einen Zeitraum von beispielsweise etwa 10 Minuten um weniger als insbesondere 2 % voneinander abweicht und die Hochdruckwellendrehzahl beider Triebwerke größer als beispielsweise 55 % der Maximaldrehzahl der Hochdruckwellen ist, kann auf einfache Weise verhindert werden, dass dynamische Vorgänge während des Flugs oder Abweichungen der verglichenen Werte während eines Starts des Flugzeugs zu einer fehlerhaften Erkennung eines Treibstofflecks führen. Ein konstanter Betriebszustand der Triebwerke kann auch erkannt werden, wenn bei beiden Triebwerken beispielsweise über einen vorbestimmten Zeitraum ein Schubbetrieb vorliegt.

Zu dem gleichen Zweck dient eine weitere Ausführung des erfindungsgemäßen Verfahrens, bei der die Steuer- und Auswerteeinrichtung ein Treibstoffleck nur erkennt, wenn eine Rückförderung von Treibstoff in die Tankeinrichtung bei beiden Triebwerken als wenigstens annähernd gleich detektiert wird, da die Rückförderung von Treibstoff in die Tankeinrichtung einen großen Einfluss auf die Temperaturen des Treibstoffsystems und des Ölkreislaufs hat. Hierdurch wird ausgeschlossen, dass ein Treibstoffleck ermittelt wird, wenn beispielsweise in einem Triebwerk Treibstoff zur Erhöhung einer Temperatur des Treibstoffs in der entsprechenden Tankeinrichtung in diese zurückgefördert wird und in dem anderen Triebwerk nicht.

Alternativ oder zusätzlich hierzu kann es vorgesehen sein, dass die Steuer-und Auswerteeinrichtung ein Treibstoffleck nur erkennt, wenn eine Rückförderung von Treibstoff in die jeweilige Tankeinrichtung in beiden Triebwerken als fehlerfrei erkannt wird, da in diesem Fall nicht sichergestellt ist, dass die Rückförderung von Treibstoff in die jeweilige Tankeinrichtung für beide Triebwerke vergleichbar ist. Bei einem in beiden Triebwerken als vergleichbar ermittelten Zustand einer Rückführung von Treibstoff in die jeweilige Tankeinrichtung können mit dem erfindungsgemäßen Verfahren z. B. Treibstoffleckageraten von etwa 2.500 pph in einem Leerlaufbetrieb und von etwa 3.100 pph in einem Flugbetrieb der Triebwerke ermittelt werden.

Eine fehlerhafte Treibstoffleckerkennung durch die Steuer- und Auswerteeinrichtung kann auch vermieden werden, wenn eine Temperatur der Tankeinrichtung des ersten Triebwerks von einer Temperatur der Tankeinrichtung des zweiten Triebwerks um weniger als 20 °C, insbesondere weniger als 10 °C, abweicht.

Bei einer vorteilhaften Weiterbildung eines erfindungsgemäßen Verfahrens ist es vorgesehen, dass die Steuer- und Auswerteeinrichtung ein Treibstoffleck nur erkennt, wenn keine Fehlermeldung einer Sensoreinrichtung, deren Werte zur Ermittlung eines Treibstofflecks herangezogen werden, ermittelt wird. Auch hierdurch kann auf einfache Weise verhindert werden, dass eine Treibstoffleckerkennung fehlerhaft ist.

Um eine fehlerhafte Treibstoffleckerkennung bei extremen Randbedingungen, wie beispielsweise einem Ausfall einer Lagereinrichtung, zu unterbinden, kann es vorgesehen sein, dass die Steuer- und Auswerteeinrichtung ein Treibstoffleck nur erkennt, wenn von der Sensoreinrichtung ermittelte Werte einer Temperatur des Öls des Ölkreislaufs bei beiden Triebwerken kleiner als ein vorgegebener Grenzwert ist und/oder wenn Vibrationen eines Triebwerks kleiner als ein vorgegebener Grenzwert sind.

Um eine Treibstoffleckerkennung besonders sicher durchführen zu können, kann die jeweilige Sensoreinrichtung die Temperatur des Treibstoffs des Triebwerks im Bereich einer zur Kühlung des Öls vorgesehenen Kühlereinrichtung ermitteln und/oder die Druckdifferenz in dem Treibstoffsystem des Triebwerks aus einem stromauf einer Filtereinrichtung vorliegenden Druck und einem stromab der Filtereinrichtung vorliegenden Druck ermitteln, wobei die Filtereinrichtung insbesondere einer zur Kühlung des Öls vorgesehenen Kühlereinrichtung zugeordnet ist und/oder die Temperatur des Öls des dem Triebwerk zugeordneten Ölkreislaufs in einem Leitungsbereich ermitteln, in dem Öl direkt zurück zu einer Öltankeinrichtung geführt wird und/oder die Druckdifferenz in dem Ölkreislauf des Triebwerks aus einem Druck in einer Ölrückführleitung und einem Druck in einer Leitung, über die einem Verbraucher Öl zugeführt wird, ermitteln.

Sowohl die in den Patentansprüchen angegebenen Merkmale als auch die in dem nachfolgenden Ausführungsbeispiel des erfindungsgemäßen Verfahrens angegebenen Merkmale sind jeweils für sich alleine oder in beliebiger Kombination miteinander geeignet, den erfindungsgemäßen Gegenstand weiterzubilden.

Weitere Vorteile und vorteilhafte Ausführungsformen des erfindungsgemäßen Verfahrens ergeben sich aus den Patentansprüchen und den nachfolgend unter Bezugnahme auf die Zeichnung prinzipmäßig beschriebenen Ausführungsbeispielen, wobei zugunsten der Übersichtlichkeit jeweils für bau- und funktionsgleiche Bauteile dieselben Bezugszeichen verwendet werden.

Es zeigt:
- Fig. 1: ein vereinfacht dargestelltes Treibstoffsystem eines Triebwerks eines Flugzeugs;
- Fig. 2: ein vereinfacht gezeigter Ölkreislauf des Triebwerks, das im Bereich einer Kühlereinrichtung mit dem Treibstoffsystem der Fig. 1 zusammenwirkt;
- Fig. 3: eine stark schematisierte Ansicht eines mit zwei Triebwerken ausgeführten Flugzeugs, wobei eine Steuer- und Auswerteeinrichtung näher ersichtlich ist; und

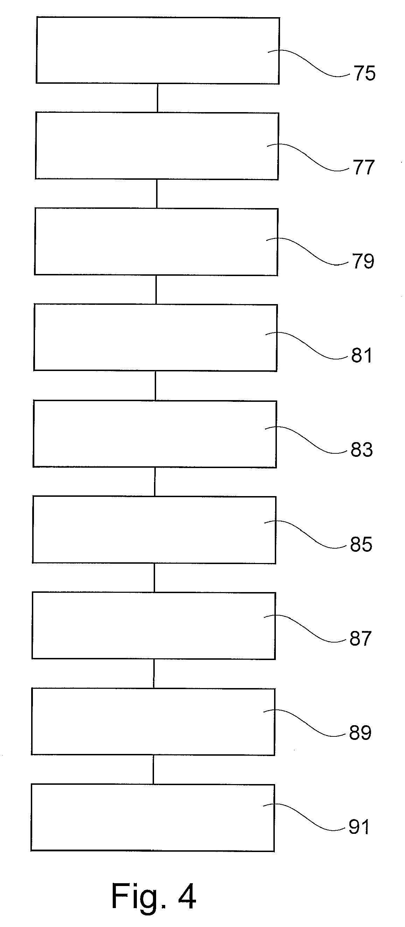

- Fig. 4: ein Ablaufschema eines vereinfacht dargestellten erfindungsgemäßen Verfahrens.

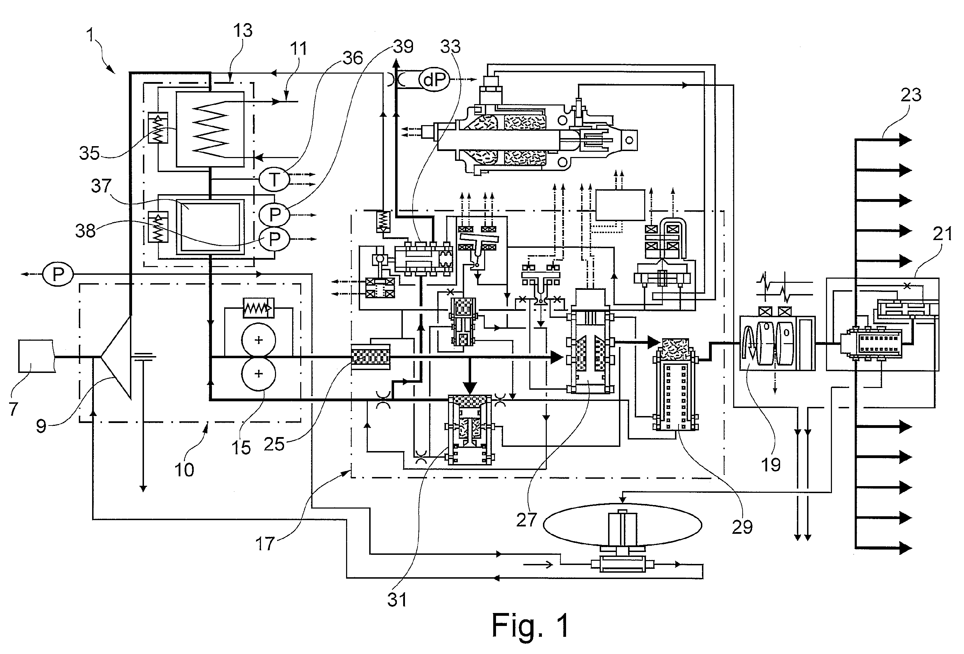

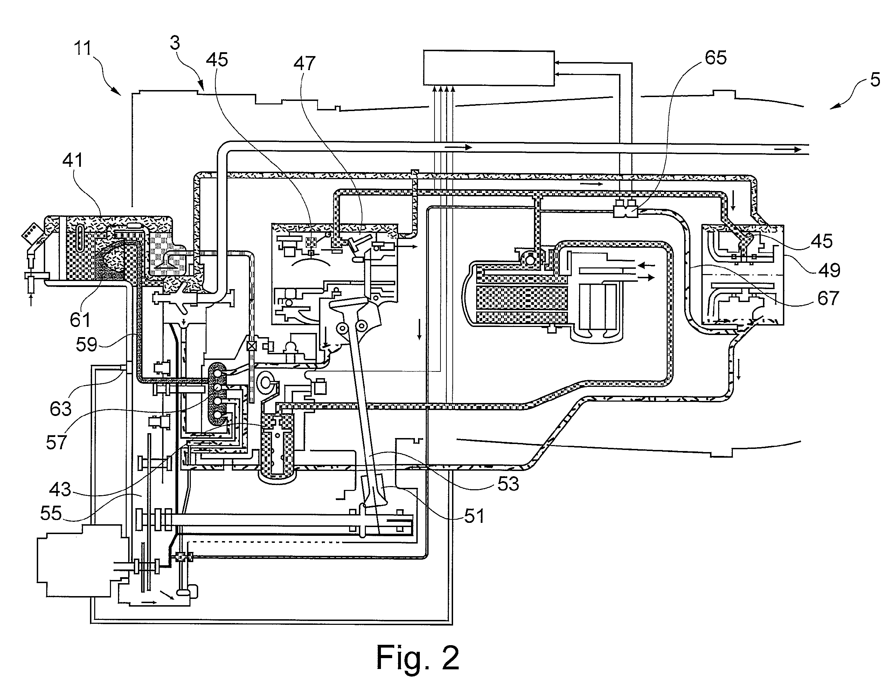

Fig. 1 zeigt ein Treibstoffsystem 1 eines Flug- bzw. Strahltriebwerks 3 eines Flugzeugs 5. Das Treibstoffsystem 1 weist eine Tankeinrichtung 7 auf, von der Treibstoff über eine Niederdruckpumpe 9 einer Pumpeneinrichtung 10 und einer zur Kühlung von Öl eines in der Fig. 2 näher ersichtlichen Ölkreislaufs 11 ausgeführten Kühlereinrichtung 13 einer Hochdruckpumpe 15 der Pumpeneinrichtung 10 zugeführt wird. Ausgehend von der Hochdruckpumpe 15 wird Treibstoff über eine Treibstoffabmesseinrichtung 17 bzw. Fuel Metering Unit und eine Durchflussmesseinrichtung 19 einer Verteilereinrichtung 21, einer sogenannten Overspeed and Splitter Unit, zugeführt, in deren Bereich der Treibstoff gleichmäßig zwischen oberen und unteren Einspritzleitungen verteilt und schließlich verschiedenen Treibstoffeinspritzdüsen 23 zugeführt wird.

Im Bereich der Treibstoffabmesseinrichtung 17 wird der Treibstoff stromab der Hochdruckpumpe 15 über eine Filtereinrichtung 25 einer Treibstoffabmessventileinrichtung 27 zugeführt, in deren Bereich ein Volumenfluss einstellbar ist. Stromab hiervon wird der Treibstoff über eine weitere Ventileinrichtung 29, ein sogenanntes Pressure Shutoff Valve, der Durchflussmesseinrichtung 19 zugeführt. Neben der Treibstoffabmesseinrichtung 27 wird Treibstoff stromab der Filtereinrichtung 25 auch einer zusätzlichen Ventileinrichtung 31, einem sogenannten Pressure Dropcontrol and Spillvalve, zugeführt, stromab derer Treibstoff einerseits zurück zur Triebwerkspumpeneinrichtung 10 und andererseits zu einer Ventileinrichtung 33, einem sogenannten Fuel Return to Tank Valve, geleitet wird. Über die Ventileinrichtung 33 ist Treibstoff zurück in die Tankeinrichtung 7 führbar.

Im Bereich der Kühlereinrichtung 13 ist ein Kühler 34 und stromab hierzu ein Filter 37 angeordnet. Stromab des Kühlers 35 und stromauf des Filters 37 ist dabei eine Temperatursensoreinrichtung 36 angeordnet, mittels welcher Werte einer Temperatur des Treibstoffs ermittelbar sind. Zudem sind im Bereich der Kühlereinrichtung 13 zwei Drucksensoreinrichtungen 38, 39 angeordnet, wobei eine Drucksensoreinrichtung 38 stromab des Filters 37 und eine Drucksensoreinrichtung 39 stromauf des Filters 37 angeordnet ist, so dass durch einen Vergleich der Werte der beiden Drucksensoreinrichtungen 38 und 39 ein Differenzdruck ermittelbar ist.

In Fig. 2 ist der Ölkreislauf 11 näher ersichtlich, wobei Öl ausgehend von einem Tank 41 mittels einer Pumpeneinrichtung 43 der Kühlereinrichtung 13 zuführbar ist, in deren Bereich das Öl des Ölkreislaufs 11 durch Treibstoff des Treibstoffsystems 1 temperiert wird. Stromab der Kühleinrichtung 13 wird Öl Verbrauchern, insbesondere Lagereinrichtungen 45 zur Lagerung von Triebwerkswellen im Bereich von Lagerkammern 47, 49 des Triebwerks 3 oder von Lagereinrichtungen 51 zur Lagerung einer Antriebswelle 53 einer Hilfsgerätegetriebeeinrichtung 55, zugeführt. Aus den Lagerkammern 47, 49 und der Hilfsgerätegetriebeeinrichtung 55 wird das Öl über mehrere Rückförderpumpen 57 schließlich über eine einzige Leitung 59 zurück zum Tank 41 geführt. Weiterhin wird dem Tank 41 Öl zugeführt, das von einem hier im Bereich des Tanks 41 angeordneten Ölabscheider 61 einem im Bereich der Verbraucher entstehenden Luft-Öl-Gemisch entnommen wird.

Der Leitung 59 ist eine Temperatursensoreinrichtung 63 zugeordnet, mittels der eine Temperatur des Öls in der Leitung 59 gemessen wird. Weiterhin weist der Ölkreislauf 11 eine Drucksensoreinrichtung 65 auf, mittels der ein Differenzdruck zwischen einem Druck des Öls stromab der Kühlereinrichtung 13 und einem Druck in einer Rückführleitung 67 für Öl von einem Verbraucher zu dem Tank 41 ermittelt wird.

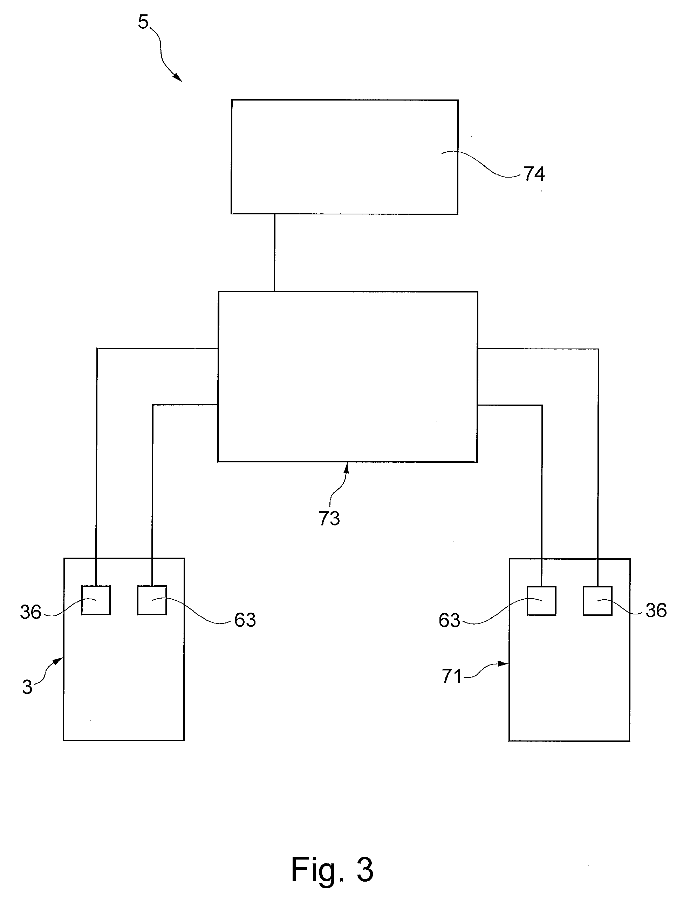

In Fig. 3 ist stark vereinfacht das mit hier zwei Triebwerken 3, 71 ausgeführte Flugzeug 5 ersichtlich, wobei die Triebwerke 3, 71 im Wesentlichen vergleichbar ausgeführt sind und somit bezüglich des Triebwerks 71 auf die Ausführungen zu dem Triebwerk 3 verwiesen wird. Jedes Triebwerk 3, 71 ist dabei mit einer Temperatursensoreinrichtung 36 und einer Temperatursensoreinrichtung 63 ausgeführt. Es ist weiterhin eine vereinfacht dargestellte Steuer- und Auswerteeinrichtung 73 ersichtlich, die in Wirkverbindung mit den Sensoreinrichtungen 36 und 63 der beiden Triebwerke 3, 71 steht und beispielsweise eine Speichereinrichtung und einen Prozessor umfassen kann. Die Steuer- und Auswerteeinrichtung 73 ist hier dem Flugzeug 5 zugeordnet und stellt insbesondere einen sogenannten Aircraft Computer dar.

Im Bereich der Steuer-und Auswerteeinrichtung 73 werden die von einander entsprechenden Sensoreinrichtungen 36 bzw. 63 ermittelten Werte in einem im Folgenden näher beschriebenen Verfahren miteinander verglichen, wobei anhand des von der Steuer- und Auswerteeinrichtung 73 durchgeführten Verfahrens ermittelt wird, ob im Bereich des Treibstoffsystems 1 ein Treibstoffleck vorliegt. Wird ein Treibstoffleck ermittelt, wird von der Steuer- und Auswerteeinrichtung 73 ein Signal an ein Cockpit 74 des Flugzeugs 5 übermittelt.

Das erfindungsgemäße Verfahren ist vorliegend für ein Flugzeug 5 mit zwei Triebwerken 3, 71 beschrieben, ist grundsätzlich aber auch bei Flugzeugen mit mehreren Triebwerken, insbesondere drei oder vier Triebwerken, einsetzbar. Das erfindungsgemäß Verfahren weist vorliegend neun Verfahrensschritte 75 bis 91 auf, wobei ein Treibstoffleck des Treibstoffsystems 1 erkannt wird, wenn sämtliche in den im Folgenden näher beschriebenen Verfahrensschritten zu prüfenden Bedingungen über einen festgelegten Zeitraum von beispielsweise 30 Sekunden erfüllt sind. Ist eine zu prüfende Bedingung nicht erfüllt, wird von der Steuer- und Auswerteeinrichtung 73 kein Treibstoffleck erkannt.

In einem ersten Verfahrensschritt 75 vergleicht die Steuer- und Auswerteeinrichtung 73 die Werte von den Sensoreinrichtungen 36 der beiden Triebwerke 3, 71 und prüft, ob zwischen den Werten eine Abweichung größer als ein in der Steuer-und Auswerteeinrichtung 73 hinterlegter Schwellwert bzw. Grenzwert ist, der vorliegend einer Temperaturdifferenz von 17 °C entspricht.

Im Rahmen eines zweiten Verfahrensschritts 77 werden von der Steuer- und Auswerteeinrichtung 73 die Werte der Sensoreinrichtungen 63 der beiden Triebwerke 3, 71 miteinander verglichen und geprüft, ob die Abweichung zwischen den Temperaturwerten größer als ein hierzu in der Steuer- und Auswerteeinrichtung 73 hinterlegter Schwellwert bzw. Grenzwert ist. Der diesbezügliche Schwellwert entspricht hier einer Differenz der Öltemperaturwerte in den Ölkreisläufen 11 der Triebwerke 3, 71 von 15 °C.

Die Steuer- und Auswerteeinrichtung 73 prüft im dritten Verfahrensschritt 79, ob für beide Triebwerke 3, 71 ein konstanter Betriebszustand über einen Zeitraum von hier zehn Minuten vorliegt. Ein konstanter Betriebszustand der beiden Triebwerke 3, 71 wird dabei detektiert, wenn Hochdruckwellendrehzahlen der beiden Triebwerke 3, 71 um weniger als 2 % voneinander abweichen.

Im Rahmen eines vierten Verfahrensschritts 81 wird geprüft, ob für beide Triebwerke 3, 71 eine Hochdruckwellendrehzahl größer als 55 % einer maximalen Hochdruckwellendrehzahl ist. Über diesen Verfahrensschritt 81 wird verhindert, dass beispielsweise während eines Starts des Flugzeugs 5 fehlerhaft ein Treibstoffleck erkannt wird.

Der fünfte Verfahrensschritt 83 ist für den Fall relevant, dass Treibstoff über die Ventileinrichtung 33 zurück in die Tankeinrichtung 7 gefördert wird, da hierdurch eine von den Sensoreinrichtungen 36, 63 ermittelte Temperatur beeinflusst wird. Es wird vorliegend geprüft, ob über einen Zeitraum von mindestens zehn Minuten für beide Triebwerke 3, 71 die gleichen Treibstoffrückförderbedingungen vorliegen, d. h. eine Treibstoffrückförderung in beiden Triebwerken 3, 71 nicht durchgeführt wird oder über den vorgegebenen Umfang in gleichem Umfang durchgeführt wird.

Da ein Treibstoffleck fehlerhaft ermittelt werden kann, wenn eine Treibstofftemperatur in den Tankeinrichtungen 7 der Triebwerke 3, 71 zu stark voneinander abweicht, wird in einem sechsten Verfahrensschritt 85 geprüft, ob eine Abweichung der von den weiteren Temperatursensoreinrichtungen gemessenen Temperaturwerte kleiner als 10 °C ist.

Im siebten Verfahrensschritt 87 wird von der Steuer- und Auswerteeinrichtung 73 geprüft, ob die Sensoreinrichtungen 36, 63 beider Triebwerke 3, 71 fehlerfrei arbeiten.

Um beispielsweise im Falle eines Versagens von Lagereinrichtungen 45 die fehlerhafte Erkennung eines Treibstofflecks aufgrund von dabei auftretenden hohen Temperaturen des Öls und großen Vibrationen im Bereich der Triebwerke 3, 71 zu verhindern, wird von der Steuer- und Auswerteeinrichtung 73 im achten Verfahrensschritt 89 geprüft, ob die von den Sensoreinrichtungen 63 übermittelten Temperaturwerte des jeweiligen Ölkreislaufs 11 kleiner als ein diesbezüglich in der Steuer-und Auswerteeinrichtung 73 hinterlegter Grenzwert sind. In einem neunten Verfahrensschritt 91 wird entsprechend geprüft, ob Vibrationen des jeweiligen Triebwerks 3, 71 kleiner als ein hierfür vorgegebener Grenzwert sind.

Ein Treibstoffleck wird mit dem erfindungsgemäßen Verfahren vorliegend nur detektiert, wenn sämtliche vorgenannten Verfahrensschritte 75 bis 91 über einen Zeitraum von 30 Sekunden positiv geprüft werden. Wird auch nur eine Bedingung eines der Verfahrensschritte 75 bis 91 nicht erfüllt, wird unabhängig von den Prüfungsergebnissen der weiteren Verfahrensschritte 75 bis 91 keine Meldung eines Treibstofflecks an das Cockpit 74 übermittelt. Prinzipiell können die Verfahrensschritte 75 bis 91 in beliebiger Reihenfolge durchgeführt werden.

Bei einer alternativen Ausführung eines erfindungsgemäßen Verfahrens können zusätzlich oder alternativ zu den von den Sensoreinrichtungen 36, 63 ermittelten Werten auch Werte der Sensoreinrichtungen 38, 39, 65 zur Erkennung eines Treibstofflecks verwendet werden.

### Bezugszeichenliste

- 1: Treibstoffsystem
- 3: Triebwerk
- 5: Flugzeug
- 7: Tankeinrichtung
- 9: Niederdruckpumpe
- 10: Pumpeneinrichtung
- 11: Ölkreislauf
- 13: Kühlereinrichtung
- 15: Hochdruckpumpe
- 17: Treibstoffabmesseinrichtung
- 19: Durchflussmesseinrichtung
- 21: Verteilereinrichtung
- 23: Treibstoffeinspritzdüse
- 25: Filtereinrichtung
- 27: Treibstoffabmessventileinrichtung
- 29: Ventileinrichtung
- 31: Ventileinrichtung
- 33: Ventileinrichtung
- 35: Kühler
- 36: Temperatursensoreinrichtung
- 37: Filter
- 38: Drucksensoreinrichtung
- 39: Drucksensoreinrichtung
- 41: Tank
- 43: Pumpeneinrichtung
- 45: Lagereinrichtung
- 47: Lagerkammer
- 49: Lagerkammer
- 51: Lagereinrichtung
- 53: Antriebswelle
- 55: Hilfsgerätegetriebeeinrichtung
- 57: Rückförderpumpe
- 59: Leitung
- 61: Ölabscheider
- 63: Temperatursensoreinrichtung
- 65: Drucksensoreinrichtung
- 67: Rückführleitung
- 71: Triebwerk
- 73: Steuer- und Auswerteeinrichtung
- 74: Cockpit
- 75: erster Verfahrensschritt
- 77: zweiter Verfahrensschritt
- 79: dritter Verfahrensschritt
- 81: vierter Verfahrensschritt
- 83: fünfter Verfahrensschritt
- 85: sechster Verfahrensschritt
- 87: siebter Verfahrensschritt
- 89: achter Verfahrensschritt
- 91: neunter Verfahrensschritt

## Patentansprüche

1. Verfahren zur Ermittlung eines Treibstofflecks eines Treibstoffsystems (1) eines wenigstens zwei Triebwerke (3, 71) aufweisenden Flugzeugs (5), wobei sowohl einem ersten Triebwerk (3) als auch einem zweiten Triebwerk (71) jeweils eine Tankeinrichtung (7) und jeweils wenigstens eine mit einer Steuer-und Auswerteeinrichtung (73) verbundene Sensoreinrichtung (36, 38, 39, 63, 65) zugeordnet ist, **dadurch gekennzeichnet, dass** mittels der wenigstens einen Sensoreinrichtung (36, 38, 39, 63, 65) Werte für das zugeordnete Triebwerk (3, 71) aus der Gruppe der Parameter
- Temperatur des Treibstoffs und/oder
- Druckdifferenz zwischen vordefinierten Stellen in dem Treibstoffsystem (1) und/oder
- Temperatur des Öls eines dem Triebwerk (3, 71) zugeordneten Ölkreislaufs (11), zu dessen Kühlung der Treibstoff als Kühlmittel vorgesehen ist, und/oder
- Druckdifferenz zwischen vordefinierten Stellen in dem dem Triebwerk (3, 71) zugeordneten Ölkreislauf (11) und/oder
- Leistung einer Pumpeneinrichtung (10) zur Förderung von Treibstoff des Treibstoffsystems (1) zu einem Brenner des Triebwerks (3, 71) ermittelt werden, wobei die Steuer- und Auswerteeinrichtung (73) von den miteinander korrespondierenden Sensoreinrichtungen (36, 38, 39, 63, 65) ermittelte Werte vergleicht und bei Vorliegen einer Abweichung der Werte eines Parameters größer als ein vorbestimmter Schwellwert ein Treibstoffleck des Treibstoffsystems (1) erkennt.

2. Verfahren nach Anspruch 1, **dadurch gekennzeichnet, dass** die Steuer- und Auswerteeinrichtung (73) zur Ermittlung eines Treibstofflecks die Werte der Triebwerke (3, 71) von wenigstens zwei der Parameter vergleicht und ein Treibstoffleck erkennt, wenn eine Abweichung der jeweiligen Werte der beiden Triebwerke (3, 71) jeweils größer als ein jeweils vorbestimmter Schwellwert ist.

3. Verfahren nach einem der Ansprüche 1 oder 2, **dadurch gekennzeichnet, dass** die Steuer- und Auswerteeinrichtung (73) ein Treibstoffleck nur erkennt, wenn die Abweichung der Werte wenigstens eines Parameters größer als der vorbestimmte Schwellwert über einen vordefinierten Zeitraum vorliegt.

4. Verfahren nach einem der Ansprüche 1 bis 3, **dadurch gekennzeichnet, dass** bei einem Vergleich der Temperaturwerte des Treibstoffs der beiden Triebwerke (3, 71) der Schwellwert einer Temperaturdifferenz größer 10 °C, insbesondere zwischen 15 °C und 30 °C, entspricht.

5. Verfahren nach einem der Ansprüche 1 bis 4, **dadurch gekennzeichnet, dass** bei einem Vergleich der Temperaturwerte des Öls der beiden Triebwerke (3, 71) der Schwellwert einer Temperaturdifferenz größer 10 °C, insbesondere zwischen 15 °C und 30 °C, entspricht.

6. Verfahren nach einem der Ansprüche 1 bis 5, **dadurch gekennzeichnet, dass** die Steuer- und Auswerteeinrichtung (73) ein Treibstoffleck nur erkennt, wenn ein konstanter Betriebszustand der beiden Triebwerke (3, 71) detektiert wird.

7. Verfahren nach einem der Ansprüche 1 bis 6, **dadurch gekennzeichnet, dass** die Steuer- und Auswerteeinrichtung (73) ein Treibstoffleck nur erkennt, wenn eine Rückförderung von Treibstoff in die jeweilige Tankeinrichtung (7) für beide Triebwerke (3, 71) als wenigstens annähernd gleich detektiert wird.

8. Verfahren nach einem der Ansprüche 1 bis 7, **dadurch gekennzeichnet, dass** die Steuer- und Auswerteeinrichtung (73) ein Treibstoffleck nur erkennt, wenn eine Rückförderung von Treibstoff in die jeweilige Tankeinrichtung (7) in beiden Triebwerken (3, 71) als fehlerfrei erkannt wird.

9. Verfahren nach einem der Ansprüche 1 bis 8, **dadurch gekennzeichnet, dass** die Steuer- und Auswerteeinrichtung (73) ein Treibstoffleck nur erkennt, wenn eine Temperatur der Tankeinrichtung (7) des ersten Triebwerks (3) von einer Temperatur der Tankeinrichtung (7) des zweiten Triebwerks (71) um weniger als 20 °C, insbesondere weniger als 10 °C, abweicht.

10. Verfahren nach einem der Ansprüche 1 bis 9, **dadurch gekennzeichnet, dass** die Steuer- und Auswerteeinrichtung (73) ein Treibstoffleck nur erkennt, wenn keine Fehlermeldung einer Sensoreinrichtung (36, 38, 39, 63, 65), deren Werte zur Ermittlung eines Treibstofflecks herangezogen werden, ermittelt wird.

11. Verfahren nach einem der Ansprüche 1 bis 10, **dadurch gekennzeichnet, dass** die Steuer- und Auswerteeinrichtung (73) ein Treibstoffleck nur erkennt, wenn von der Sensoreinrichtung (63) ermittelte Werte einer Temperatur des Öls des Ölkreislaufs (11) bei beiden Triebwerken (3, 71) kleiner als ein vorgegebener Grenzwert sind.

12. Verfahren nach einem der Ansprüche 1 bis 11, **dadurch gekennzeichnet, dass** die Steuer- und Auswerteeinrichtung (73) ein Treibstoffleck nur erkennt, wenn Vibrationen eines Triebwerks (3, 71) kleiner als ein vorgegebener Grenzwert sind.

13. Verfahren nach einem der Ansprüche 1 bis 12, **dadurch gekennzeichnet, dass** die jeweilige Sensoreinrichtung (36) die Temperatur des Treibstoffs des Triebwerks (3, 71) im Bereich einer zur Kühlung des Öls vorgesehenen Kühlereinrichtung (13) ermittelt.

14. Verfahren nach einem der Ansprüche 1 bis 13, **dadurch gekennzeichnet, dass** die jeweilige Sensoreinrichtung (38, 39) die Druckdifferenz in dem Treibstoffsystem (1) des Triebwerks (3, 71) aus einem stromauf einer Filtereinrichtung (37) vorliegenden Druck und einem stromab der Filtereinrichtung (37) vorliegenden Druck ermittelt, wobei die Filtereinrichtung (37) insbesondere einer zur Kühlung des Öls vorgesehenen Kühlereinrichtung (13) zugeordnet ist.

15. Verfahren nach einem der Ansprüche 1 bis 14, **dadurch gekennzeichnet, dass** die jeweilige Sensoreinrichtung (63) die Temperatur des Öls des dem Triebwerk (3, 71) zugeordneten Ölkreislaufs (11) in einem Leitungsbereich (59) ermittelt, in dem Öl direkt zurück zu einer Öltankeinrichtung (41) geführt wird.
